# EUROPEAN PATENT APPLICATION

(11) **EP 3 432 048 A1**
(43) Date of publication of application: **23.01.2019**
(21) Application number: 17182016.0
(22) Date of filing: 19.07.2017
(51) Int. Cl.: G02B 7/18, G02B 7/182, G02B 26/10

(54) **IMPROVED FAST STEERING MIRROR**

(71) Applicant: Nederlandse Organisatie voor toegepast- natuurwetenschappelijk onderzoek TNO, 2595 DA 's-Gravenhage (NL)
(72) Inventor: KUIPER, Stefan, 2595 DA 's-Gravenhage (NL); DEKKER, Albert, 2595 DA 's-Gravenhage (NL); LEMMEN, Martinus Henricus Johannes, 2595 DA 's-Gravenhage (NL)
(74) Representative: V.O.

(57) **Abstract**

A fast steering mirror comprises a connection structure, which pivotably connects a mirror (3) to a base structure. The connection structure comprises a thermal strap structure (10), which comprises a first heat transfer contact area (21) in contact with the mirror, at least three strap-shaped portions (20A-20D), and at least three second heat transfer contact areas (22A-22D) in contact with the base structure. Thanks to the special feature that the first heat transfer contact area is closer to the mirror center line (7) than the at least three second heat transfer contact areas, the thermal strap structure introduces only low parasitic pivoting stiffness. Thereby the invention prevents the occurrence of shape inaccuracies of the mirror, especially in case of high optical powers and when broadband coatings have been applied to the mirror surface.

## Description

The invention relates to a fast steering mirror, which comprises a base structure and a mirror, wherein the mirror can perform tip-and-tilt movements relative to the base structure.

Such a fast steering mirror is for example used in laser communication to align the line of sight of a communication terminal with that of a partnering satellite. The higher the data-rate and communication distance, the higher the optical power. Future communication terminals will work with optical powers larger than 10 Watt. Such high optical powers result into relatively high heating of the optics due to absorption. Heating is particularly a problem for a fast steering mirror since the mirror of a fast steering mirror has only very limited thermal coupling with the rest of the optical bench, leading to high temperatures of the mirror and consequently shape inaccuracies of the mirror.

To minimize the absorption, one usually applies high-end optical coatings to the mirror surface in order to maximize the reflection. However, these coatings are vulnerable. A further drawback is that these coatings generally are able to achieve very high reflection only in a very narrow band width. For broadband coatings the absorption still is undesirably high, i.e. in the order of 2-3%.

It is an object of the invention to minimize shape inaccuracies of a mirror of a fast steering mirror, especially in case of high optical powers, and when broadband coatings have been applied to the mirror surface.

For that purpose the invention provides a fast steering mirror comprising:
- a base structure for being fixedly attached within a working environment;
- a mirror, which comprises a mirror surface;
- a connection structure, which moveably connects the mirror to the base structure; wherein the connection structure comprises:
   - a guiding structure for guiding tip-and-tilt movements of the mirror relative to the base structure; and
   - an actuating mechanism for actuating said tip-and-tilt movements;
- a first pivot axis and a second pivot axis, defined as being two pivot lines of said tip-and-tilt movements;
- a mirror center line, defined as being a line which perpendicularly intersects both the first pivot axis and the second pivot axis;
characterized in that
the connection structure further comprises a thermal strap structure for transferring heat from the mirror to the base structure, wherein the thermal strap structure comprises:
- at least one first heat transfer contact area, which is in contact with the mirror for heat transfer from the mirror to the thermal strap structure;
- at least three strap-shaped portions;
- at least three second heat transfer contact areas, which correspond to the at least three strap-shaped portions, respectively, wherein each of the at least three second heat transfer contact areas is in contact with the base structure for heat transfer from the thermal strap structure to the base structure;
wherein the thermal strap structure is configured for transferring heat from the mirror to the base structure successively via the at least one first heat transfer contact area, the at least three strap-shaped portions, and the at least three second heat transfer contact areas, respectively;
and wherein the at least one first heat transfer contact area is closer to the mirror center line than the at least three second heat transfer contact areas.

Hence, the fast steering mirror according to the invention is characterized in that its connection structure has the abovementioned thermal strap structure with the abovementioned specific features.

In the first place it is noted that a thermal strap structure, by its nature, provides a high degree of heat transfer. In the fast steering mirror according to the invention such an effective heat transfer from the mirror to the base structure allows for the application of broadband coatings in case of high optical powers, while at the same time preventing high temperatures of the mirror. Hence, the thermal strap structure reduces temperature-induced shape inaccuracies of the mirror.

However, in addition to taking into account temperature-induced shape inaccuracies of the mirror, there is more to take care of when applying a thermal strap structure to a fast steering mirror. That is, the application of a thermal strap structure will generally lead to parasitic-stiffness-induced shape inaccuracies of the mirror. These parasitic-stiffness-induced shape inaccuracies may negate the reduction in temperature-induced shape inaccuracies of the mirror. As explained hereinafter, the specific thermal strap structure of the fast steering mirror according to the present invention effectively addresses and overcomes this problem.

In summary this is explained as follows. Thanks to the special feature of the thermal strap structure that the at least one first heat transfer contact area is closer to the mirror center line than the at least three second heat transfer contact areas, only small deformations of the thermal strap structure occur during the various tip-and-tilt movements of the mirror relative to the base structure. Thanks to these small deformations, the thermal strap structure introduces only low parasitic pivoting stiffness to the pivoting stiffness of the other components of the connection structure of the fast steering mirror. This low parasitic stiffness prevents the occurrence of uncontrollable parasitic stresses and deformations in the mirror. In other words, the specific thermal strap structure of the fast steering mirror according to the invention has the additional advantage that it additionally prevents the occurrence of parasitic-stiffness-induced shape inaccuracies of the mirror.

As used herein, the first pivot axis and the second pivot axis of the fast steering mirror according to the invention are of course non-parallel relative to one another in order to provide said tip-and-tilt movements. Furthermore, as used herein, the first pivot axis and the second pivot axis may be mutually orthogonal, but instead they may be at various non-perpendicular angles relative to one another. Furthermore, as used herein, the first pivot axis and the second pivot axis may intersect one another, but instead they may cross one another at a distance. Typically the pivot ranges of the mirror relative to the base structure about the first pivot axis and the second pivot axis are each in the order of between plus and minus one degree or plus and minus a few degrees relative to a neutral reference position of the mirror relative to the base structure.

In a preferable embodiment of a fast steering mirror according to the invention, at least one of the at least three strap-shaped portions, as considered in at least two different longitudinal positions along the longitudinal direction of the strap-shaped portion concerned, is at least two times folded, respectively, in at least two mutually opposite folding directions, respectively. The application of these at least two folds have a further beneficial influence on keeping the abovementioned parasitic pivoting stiffness introduced by the thermal strap structure as low as possible. In other words, these at least two folds further contribute to preventing parasitic-stiffness-induced shape inaccuracies of the mirror.

In another preferable embodiment of a fast steering mirror according to the invention, the at least three second heat transfer contact areas are equally spaced relative to one another as seen in circumferential direction around the mirror center line. This provides an omni-directionally well-distributed heat transfer via the thermal strap structure, as well as an omni-directionally well-distributed parasitic pivoting stiffness of the thermal strap structure. In other words, the equal angular spacing of the at least three second heat transfer contact areas further contributes to preventing both temperature-induced shape inaccuracies of the mirror and parasitic-stiffness-induced shape inaccuracies of the mirror.

In the following, the invention is further elucidated with reference to a non-limiting embodiment and with reference to the schematic figures in the attached drawing, in which the following is shown.

Fig. 1 shows an exploded perspective view of an example of an embodiment of a fast steering mirror according to the invention.

Fig. 2 separately shows the mirror and the thermal strap structure of the fast steering mirror of Fig. 1 again, however, this time in a perspective view on the underside of the mirror, and wherein this time the thermal strap structure is assembled to the mirror.

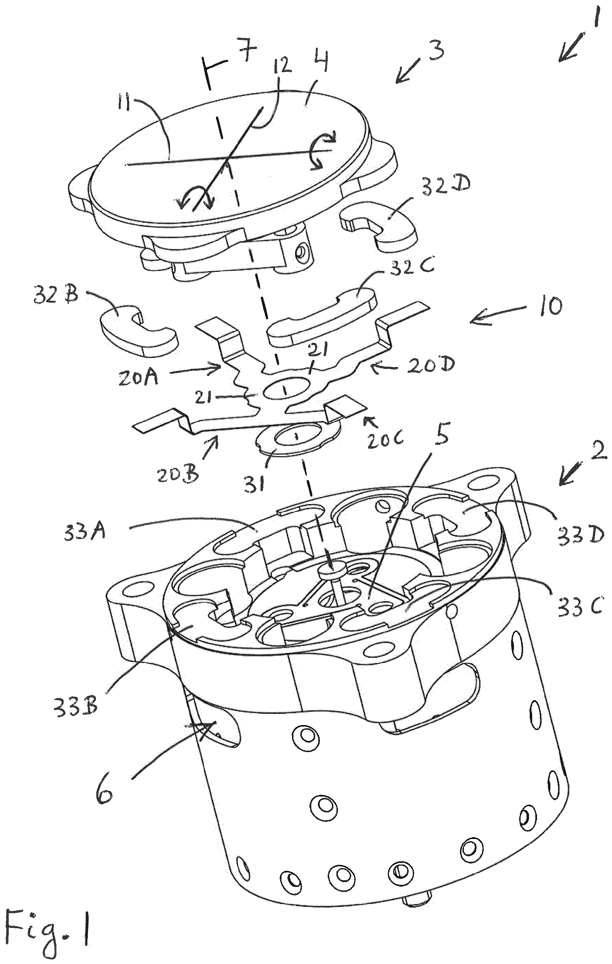

The reference signs used in Figs. 1-2 are referring to the abovementioned parts and aspects of the invention, as well as to related parts and aspects, in the following manner.
- 1: fast steering mirror
- 2: base structure
- 3: mirror
- 4: mirror surface
- 5: guiding structure
- 6: actuating mechanism
- 7: mirror center line
- 10: thermal strap structure
- 11: first pivot axis
- 12: second pivot axis
- 20A-20D: strap-shaped portions
- 21: first heat transfer contact area
- 22A-22D: second heat transfer contact areas
- 24A-24D: folds in strap-shaped portions 20A-20D
- 31: fixation ring
- 32A-32D: fixation parts
- 33A-33D: fixation recesses

Based on the above introductory description, including the above brief description of the drawing figures, and based on the above-explained reference signs used in the drawing, the shown examples of Figs. 1-2 are for the greatest part readily self-explanatory. The following extra explanations are given.

Figs. 1-2 show the thermal strap structure 10 of the connection structure of the fast steering mirror 1. Through the help of the shown fixation ring 31, the thermal strap structure 10 is fixedly attached to the underside of the mirror 3 (e.g. by gluing), in such manner that the first heat transfer contact area 21 is in contact with the mirror 3 for heat transfer from the mirror 3 to the thermal strap structure 10. It is seen that in the shown example the number of the at least three strap-shaped portions of the thermal strap structure 10 is four. These four strap-shaped portions and the corresponding four second heat transfer contact areas are indicated by the reference signs 20A-20D and 22A-22D, respectively. Through the help of the shown fixation parts 32A-32D the thermal strap structure 10 is fixedly attached (e.g. by gluing) within the shown fixation recesses 33A-33D in the base structure 2, in such manner that the second heat transfer contact areas 22A-22D are in contact with the base structure 2 for heat transfer from the thermal strap structure 10 to the base structure 2.

It is noted that, apart from the thermal strap structure 10, the other parts of the connection structure of the fast steering mirror 1 are only partly shown or indicated in Figs. 1-2, since the details of these other parts of the connection structure are not relevant for understanding the present invention. For example, reference numeral 5 in Fig. 1 indicates a part of the guiding structure of the connection structure of the fast steering mirror 1. In the shown example, the reference numeral 5 more specifically indicates an elastic membrane, which is configured and arranged to provide flexural guidance of the abovementioned tip-and-tilt movements of the mirror 3 relative to the base structure 2. A central portion of the elastic membrane 5 is attached to the base structure 2, while three peripherally protruding portions of the elastic membrane 5 are attached to the underside of the mirror 3. The elastic membrane 5 provides a substantial part of the pivoting stiffness involved in the tip-and-tilt movements of the mirror 3 relative to the base structure 2. Furthermore, the reference numeral 6 in Fig. 1 indicates parts of the actuating mechanism of the connection structure of the fast steering mirror 1, said parts 6 of the actuating mechanism being located inside the base structure 2 (and therefore not visible in Fig. 1).

From Figs. 1-2 it follows that the first heat transfer contact area 21 is closer to the mirror center line 7 than the second heat transfer contact areas 22A-22D. Therefore the thermal strap structure introduces only low parasitic pivoting stiffness, as compared to the pivoting stiffness of inter alia the elastic membrane 5. Thereby the invention prevents the occurrence of parasitic-stiffness-induced shape inaccuracies of the mirror.

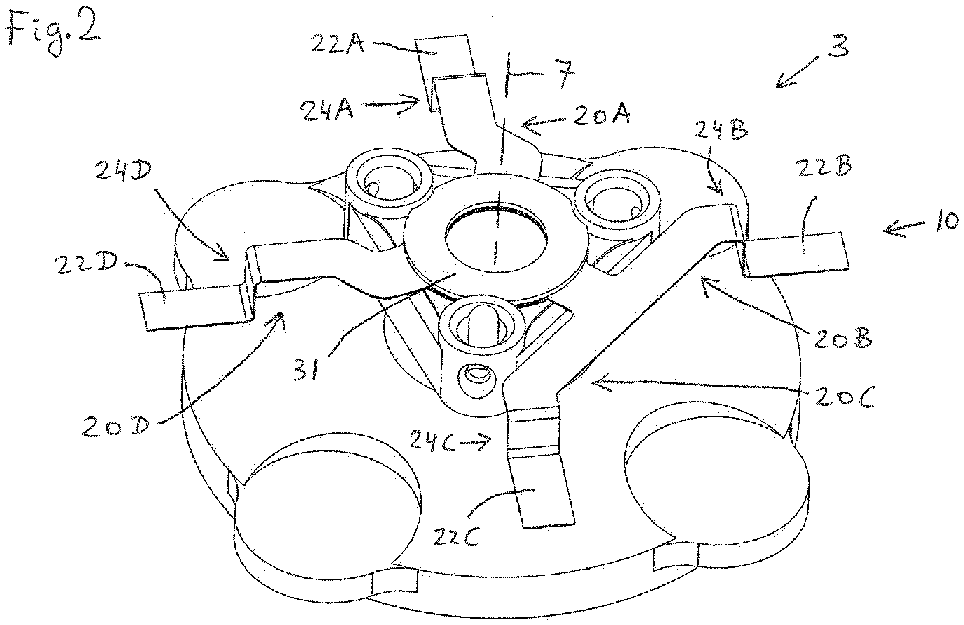

In Fig. 2 the reference signs 24A-24D indicate double folds of the strap-shaped portions 20A-20D, respectively. The application of these double folds 24A-24D have a further beneficial influence on keeping the abovementioned parasitic pivoting stiffness introduced by the thermal strap structure 10 as low as possible. In other words, these double folds further contribute to preventing parasitic-stiffness-induced shape inaccuracies of the mirror.

From Figs. 1-2 it follows that the second heat transfer contact areas 22A-22D are equally spaced relative to one another as seen in circumferential direction around the mirror center line 7. This provides an omni-directionally well-distributed heat transfer via the thermal strap structure, as well as an omni-directionally well-distributed parasitic pivoting stiffness of the thermal strap structure. In other words, the equal angular spacing of the second heat transfer contact areas 22A-22D further contributes to preventing both temperature-induced shape inaccuracies of the mirror and parasitic-stiffness-induced shape inaccuracies of the mirror.

It is noted that according to the invention, the thermal strap structure 10 may be made in many various manners from many various materials. For example, the thermal strap structure 10 may be made in many various manners from many various materials, as known in the art. For example the thermal strap structure 10 may be made from copper.

While the invention has been described and illustrated in detail in the foregoing description and in the drawing figures, such description and illustration are to be considered exemplary and/or illustrative and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single item recited in the claims may fulfil the functions of several items recited in the claims. For the purpose of clarity and a concise description, features are disclosed herein as part of the same or separate embodiments, however, it will be appreciated that the scope of the invention may include embodiments having combinations of all or some of the features disclosed. The mere fact that certain measures are recited in mutually different dependent claims does not indicate that a combination of these measures can not be used to advantage. Any reference signs in the claims should not be construed as limiting the scope.

## Claims

1. A fast steering mirror (1) comprising:
• a base structure (2) for being fixedly attached within a working environment;
• a mirror (3), which comprises a mirror surface (4);
• a connection structure (5, 6, 10), which moveably connects the mirror to the base structure; wherein the connection structure comprises:
- a guiding structure (5) for guiding tip-and-tilt movements of the mirror relative to the base structure; and
- an actuating mechanism (6) for actuating said tip-and-tilt movements;
• a first pivot axis (11) and a second pivot axis (12), defined as being two pivot lines of said tip-and-tilt movements;
• a mirror center line (7), defined as being a line which perpendicularly intersects both the first pivot axis and the second pivot axis;
**characterized in that**
the connection structure further comprises a thermal strap structure (10) for transferring heat from the mirror (3) to the base structure (2), wherein the thermal strap structure comprises:
- at least one first heat transfer contact area (21), which is in contact with the mirror for heat transfer from the mirror to the thermal strap structure;
- at least three strap-shaped portions (20A-20D);
- at least three second heat transfer contact areas (22A-22D), which correspond to the at least three strap-shaped portions, respectively, wherein each of the at least three second heat transfer contact areas is in contact with the base structure for heat transfer from the thermal strap structure to the base structure;
wherein the thermal strap structure (10) is configured for transferring heat from the mirror (3) to the base structure (2) successively via the at least one first heat transfer contact area (21), the at least three strap-shaped portions (20A-20D), and the at least three second heat transfer contact areas (22A-22D), respectively;
and wherein the at least one first heat transfer contact area (21) is closer to the mirror center line (7) than the at least three second heat transfer contact areas (22A-22D).

2. A fast steering mirror (1) according to claim 1, wherein at least one of the at least three strap-shaped portions (20A-20D), as considered in at least two different longitudinal positions along the longitudinal direction of the strap-shaped portion concerned, is at least two times folded (24A-24D), respectively, in at least two mutually opposite folding directions, respectively.

3. A fast steering mirror (1) according to claim 1 or 2, wherein the at least three second heat transfer contact areas (22A-22D) are equally spaced relative to one another as seen in circumferential direction around the mirror center line (7).
